Europäisches Patentamt

European Patent Office (11) Numéro de publication: **0 289 403**

Office européen des brevets A1

(19)

# (12) DEMANDE DE BREVET EUROPEEN

(21) Numéro de dépôt: **88400983.8**

(51) Int. Cl.4: **H 02 M 7/523**

(22) Date de dépôt: **21.04.88**

(30) Priorité: **29.04.87 FR 8706129**

(43) Date de publication de la demande:
**02.11.88 Bulletin 88/44**

(84) Etats contractants désignés:
**AT BE CH DE ES GB IT LI LU NL SE**

(71) Demandeur: **ELECTRICITE DE FRANCE Service National
2, rue Louis Murat
F-75008 Paris (FR)**

**ECOLE SUPERIEURE D'INGENIEURS DE MARSEILLE S.A.
Palais de la Bourse
F-13001 Marseille (FR)**

**COMPAGNIE FRANCAISE D'ELECTROTHERMIE INDUSTRIELLE C.F.E.I.
20 avenue de Grenoble
F-38170 Seyssinet-Pariset (FR)**

(72) Inventeur: **Lafore, Dominique
CD 43 St Jean
F-13420 GEMENOS (FR)**

**Redoutey, Joel
14, Les Bastidonnes Rue St Jean du Désert
F-13012 MARSEILLE (FR)**

**Servet, Yves
4, Rue des Remparts
F-83470 ST MAXIMIN/STE BAUME (FR)**

(74) Mandataire: **Obolensky, Michel et al
c/o CABINET LAVOIX 2, place d'Estienne d'Orves
F-75441 Paris Cédex 09 (FR)**

(54) **Circuit d'auto-pilotage pour onduleur à résonance.**

(57) Circuit d'auto-pilotage pour onduleur de courant ou tension à résonance comprenant une source d'alimentation formée d'un générateur de tension continue, d'un élément de stockage inductif ou capacitif (2) et d'un circuit résonnant parallèle ou série alimenté par ladite source, et des moyens ($K_1$ à $K_4$) d'inversion de la polarité de connexion du circuit résonnant à la source d'alimentation, caractérisé en ce qu'il comporte des moyens (7,8) de détection de la tension ou du courant en amont et en aval de l'élément de stockage (2) de ladite source d'alimentation, les variations de la tension ou du courant en aval dudit élément de stockage étant liées représentatives des variations de charge du circuit résonnant, des moyens (11) de comparaison des signaux de sortie des moyens de détection (7,8) et des moyens (12,13) de production des signaux de commande desdits moyens ($K_1$ à $K_4$) d'inversion de la polarité de connexion du circuit résonnant à la source d'alimentation en fonction des signaux de sortie desdits moyens de comparaison (11).

FIG.3

EP 0 289 403 A1

## Description

### Circuit d'auto-pilotage pour onduleur à résonance.

La présente invention est relative aux onduleurs à résonance et se rapporte plus particulièrement aux dispositifs de pilotage de tels onduleurs.

Le développement des semi-conducteurs de puissance ayant des vitesses de commutation élevées permet un développement rapide de convertisseurs à fréquences importantes, fonctionnant avec des charges résonnantes.

La commande des onduleurs à résonance nécessite une fréquence de pilotage voisine de celle du circuit oscillant de charge, qu'il soit série ou parallèle.

Lorsque la charge a une fréquence de résonance variable, il est nécessaire que la fréquence de pilotage du circuit suive la fréquence de résonance. Tel est notamment le cas pour les charges de dispositifs de chauffage par induction.

Les solutions utilisées jusqu'à présent pour faire suivre la fréquence de résonance de la charge par la fréquence de pilotage de l'onduleur reposent sur l'emploi d'une boucle de régulation de phase et/ou de fréquence à détecteur de phase et oscillateur à fréquence commandée par tension, VCO dont les caractéristiques globales sont les suivantes.

- Des conditions de démarrage spécifiques et des circuits correspondants.
- Des constantes de temps de réaction relativement lentes par rapport aux périodes d'oscillation des charges.
- Une plage de variation de fréquence limitée par le VCO.

L'invention vise à remédier aux inconvénients des dispositifs connus en créant un circuit d'auto-pilotage pour onduleur à résonance qui, tout en étant d'une construction relativement simple, présente une plage de variation de fréquence qui lui permette de suivre les variations de la fréquence de résonance de la charge quelle que soit la plage de variation de celle-ci.

Elle a donc pour objet un circuit d'auto-pilotage pour onduleur à résonance comprenant une source d'alimentation formée d'un générateur de tension continue, d'un élément de stockage et d'un circuit résonnant alimenté par ladite source, et des moyens d'inversion de la polarité de connexion du circuit résonnant à la source d'alimentation, caractérisé en ce qu'il comporte des moyens de détection d'une tension ou d'un courant de référence en amont de l'élément de stockage et de la tension ou du courant en aval de l'élément de stockage de ladite source d'alimentation, les variations de la tension ou du courant en aval dudit élément de stockage étant liées aux variations de charge aux bornes du circuit résonnant, des moyens de comparaison des signaux de sortie des moyens de détection et des moyens de production de signaux de commande desdits moyens d'inversion de la polarité de connexion du circuit résonnant à la source d'alimentation en fonction des signaux de sortie desdits moyens de comparaison.

L'invention sera mieux comprise à l'aide de la description qui va suivre, donnée uniquement à titre d'exemple et faite en se référant aux dessins annexés, sur lesquels :
- la Fig.1 est un schéma de principe d'un onduleur alimenté en courant;
- la Fig.2 est un diagramme en fonction du temps représentant la variation des tensions aux bornes de la source d'alimentation et de la charge de l'onduleur de la Fig.1;
- la Fig.3 est un schéma synoptique du cir-cuit d'auto-pilotage suivant l'invention;
- la Fig.4 est un diagramme en fonction du temps de signaux apparaissant en certains points du circuit de la Fig.3;
- la Fig.5 est un schéma de principe d'un onduleur alimenté en tension;
- la Fig.6 est un schéma synoptique d'un circuit d'amélioration de la constante de temps d'un onduleur à auto-pilotage suivant l'invention;
- la Fig.7 est un schéma synoptique d'un mode de réalisation du diviseur par deux entrant dans la construction du circuit d'auto-pilotage suivant l'invention; et
- la Fig.8 est un schéma plus détaillé d'un circuit d'auto-pilotage à phase constante avec génération de temps de découvrement et de recouvrement suivant l'invention.

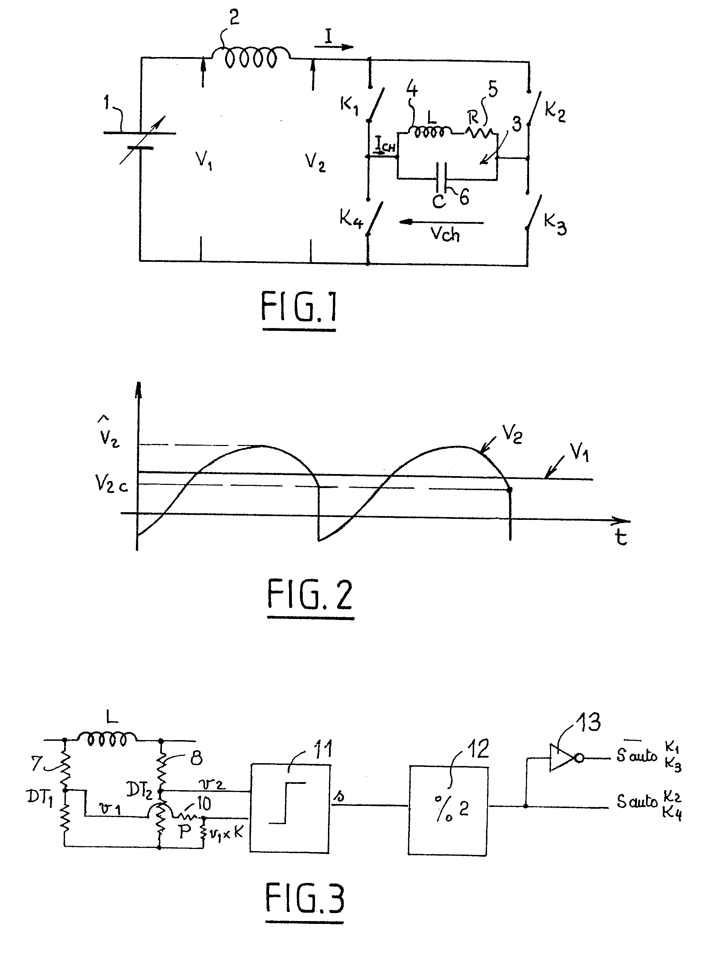

L'onduleur représenté à la Fig.1 comporte essentiellement une source de courant formé d'un générateur 1 de tention E continue et d'une inductance 2.

La source de courant ainsi constituée est connectée aux bornes d'une charge résonnante 3 formée d'un inductance 4 en série avec une résistance 5, montées en parallèle avec un condensateur 6.

Les bornes du circuit résonnant 3 sont respectivement connectées d'une part à l'inductance 2 de la source de courant par des interrupteurs $K_1$ et $K_2$ et d'autre part à la borne du générateur 1 de tension variable opposée à l'inductance 2 par des interrupteurs $K_3$ et $K_4$.

La tension aux bornes du générateur 1 est désignée par $V_1$ et constitue une tension de référence.

La tension à la sortie de la source de cou-rant est désignée par $V_2$.

Le courant délivré par la source est désigné par I.

La tension aux bornes de la charge est désignée par $V_{ch}$.

En supposant que le circuit de la Fig.1 se trouve en régime de fonctionnement constant, les grandeurs énoncées ci-dessus se comportent de la façon suivante.

I est constant

$V_1$ est une tension continue

$V_2$ est une tension égale à $V_{ch}$ lorsque les interrupteurs $K_1$ et $K_3$ sont fermés, les interrupteurs $K_2$ et $K_4$ étant ouverts, et à $-V_{ch}$ lorsque les interrupteurs $K_2$ et $K_4$ sont fermés, $K_1$ et $K_3$ étant ouverts.

Par ailleurs, les tensions $V_1$ et $V_2$ sont égales en valeur moyenne.

Cette égalité est exprimée par la relation

$$V_1 = \frac{2}{\pi} \hat{V}_2 \cos \varphi \qquad (1)$$

$\varphi$ est le déphasage entre le courant $I_{ch}$ et la tension $V_{ch}$.

Par conséquent, pour cos constant, la tension $V_1$ est proportionnelle à la valeur de crête $\hat{V}_2$ de la tension $V_2$.

A l'instant de la commutation des interrupteurs $K_1$ à $K_4$, la valeur $V_{2c}$ de la tension $V_2$ est donnée par la relation

$$V_{2c} = \hat{V}_2 \sin \varphi \qquad (2)$$

En remplaçant $\hat{V}_2$ par la valeur tirée de la relation (1), on obtient

$$V_{2c} = \frac{\pi}{2} V_1 \, tg \, \varphi \quad et \quad tg \, \varphi = \frac{2}{\pi} \frac{V_{2c}}{V_1} \qquad (3)$$

Si l'on choisit $V_{2c}$ proportionnelle à $V_1$, ce qui est le cas pour $\varphi$ donné : $V_{2c} = K_{V1}$, on aura :

$$tg \, \varphi = \frac{2}{\pi} \times K \qquad (4)$$

Par conséquent, $\varphi$ est indépendant de la tension $V_2$ de sortie de la source et de la fréquence f.

Sur la Fig.3, on a représenté un mode de réalisation pratique d'un circuit d'auto-pilotage par commutation séquentielle des interrupteurs $K_1$ à $K_4$ de l'onduleur représenté à la Fig.1.

Ce circuit comporte connectés de part de d'autre de l'inductance 2 du générateur de courant des détecteurs 7 et 8 constitués chacun par un diviseur de tension formé de deux résistances en série, les résistances correspondantes de chaque détecteur étant égales.

Un tel agencement permet d'obtenir sur les bornes intermédiaires des détecteurs 7 et 8 des tensions $v_1$ et $v_2$ images des tensions $V_1$ et $V_2$.

En parallèle sur la résistance du détecteur 7 connectée à la masse est branché un diviseur de tension 10 permettant d'obtenir une tension $kv_1$ à partir de la tension $v_1$ image de la tension $V_1$ aux bornes du générateur 1.

La sortie de détecteur 8 d'une part et le diviseur de tension 10 d'autre part sont connectés aux entrées d'un comparateur 11 destiné à délivrer un signal $\underline{s}$.

Le comparateur 11 est à son tour connecté par sa sortie à un circuit 12 diviseur de fréquence par deux, constitué par exemple par une bascule.

La sortie de la bascule 12 constitue une sortie d'auto-pilotage de l'onduleur, destinée à commander les interrupteurs $K_2$ et $K_4$.

Un inverseur 13 connecté à la sortie du diviseur par deux 12 comporte une sortie permettant de commander les interrupteurs $K_1$ et $K_3$ à l'aide d'un signal complémentaire à celui apparaissant sur la sortie de la bascule 12.

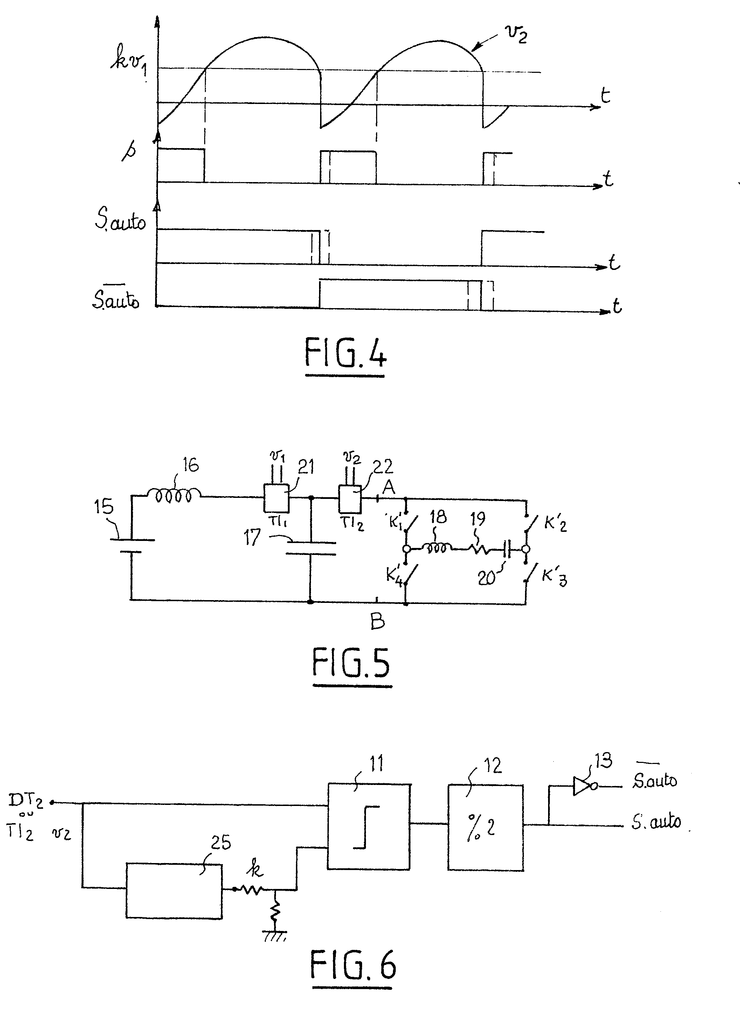

Le diagramme de la Fig.4 montre l'allure des signaux $kv_1$, $v_2$, s, S auto et $\overline{S\,auto}$ du circuit d'auto-pilotage de la Fig.3.

Les interrupteurs $K_1$ à $K_4$ sont avantageusement constitués par des transistors bipolaires de puissance MOS.

Le fonctionnement du circuit d'auto-pilotage décrit à la Fig.3 est le suivant.

Les détecteurs de tension 7 et 8 connectés aux bornes de l'inductance 9 de la source de courant délivrent respectivement les tensions $v_1$ et $v_2$ qui sont les images des tensions $V_1$ et $V_2$ définies plus haut.

Le comparateur 11 aux entrées duquel sont appliqués d'une part la tension $v_2$ et d'autre part la tension $kv_1$ (Fig.4) compare ces signaux et délivre à sa sortie un signal $\underline{s}$ rectangulaire dont la cadence et la largeur sont déterminées par les instants auxquels les tensions $kv_1$ et $v_2$ sont égales.

Le signal $\underline{s}$ est ensuite divisé par le diviseur par deux 12 à la sortie duquel apparaissent les signaux S auto et $\overline{S\,auto}$, ce dernier étant obtenu grâce à la présence de l'inverseur 13.

Le circuit de la Fig.3 permet donc lors de la variation de la tension $V_{ch}$ aux bornes de la charge de repercuter immédiatement cette variation sur le fonctionnement de l'onduleur en comparant les signaux images de la tension d'alimentation de l'onduleur et de la tension de la charge et en provoquant en fonction de cette comparaison une modification de la cadence et de la largeur des signaux de commande des interrupteurs $K_1$ à $K_4$.

Le dispositif suivant l'invention est donc un dispositif d'auto-pilotage des ordres de commande de l'onduleur par la charge elle-même.

Ce dispositif permet de maintenir constante la phase entre le courant et la tension fournie par l'onduleur et ceci quels que soient le niveau de puissance fourni à la charge et la fréquence de la charge.

Le temps de réponse intrinséque du dispositif est d'une demi-période de la haute fréquence de l'onduleur.

La Fig.5 montre le schéma d'un onduleur alimenté en tension.

Il comprend un générateur de tension 15 aux bornes duquel sont connectés en série une inductance 16 et un condensateur 17.

Aux bornes du condensateur 17 est connecté un circuit série formé d'une inductance 18, d'une résistance 19 et d'un condensateur 20, par l'intermédiaire d'interrupteurs $K'_1$ à $K'_4$ agencés de la même manière que les interrupteurs $K_1$ à $K_4$ du circuit de la Fig.1.

Deux détecteurs de courant 21 et 22 sont connectés entre l'inductance 16 et le circuit série 18, 19,20 respectivement en amont et en aval de l'élément de stockage que constitue le condensateur 17.

Les détecteurs de courant 21 et 22 peuvent être constitués par des capteurs de courant à effet Hall, des shunts ou autres.

Les tensions $v_1$ et $v_2$ délivrées par les détecteurs 21 et 22 sont traitées dans un circuit identique à celui de la Fig.3 pour obtenir les signaux S auto et $\overline{S\ auto}$ de commande des interrupteurs $K'_2$ et $K'_4$ et $K'_1$ et $K'_3$ respectivement.

Il y a lieu de remarquer que le dispositif suivant l'invention peut fonctionner avec une commande en avance de phase lorsque $v_1$ et $v_2$ sont de même signe ou en retard de phase lorsque $v_1$ et $v_2$ sont de signes opposés.

Le dispositif suivant l'invention délivre les signaux de commande S auto et $\overline{S\ auto}$ de telle façon que la phase entre le courant et la tension d'alimentation de l'onduleur reste constante quelle que soit la valeur de la charge et avec une fréquence qui est pilotée par la charge elle-même.

La constante de temps du circuit est liée à celle de l'élément de stockage, à savoir l'inductance 2 pour le circuit de la Fig.1 et le condensateur 17 pour le circuit de la Fig.5.

Le circuit de la Fig.6 permet d'améliorer cette constante de temps.

Ce circuit est similaire à celui de la Fig.3 et n'en diffère que par le fait que les entrées du comparateur 11 au lieu d'être connectées à la sortie des détecteurs de tension 7 et 8 sont maintenant reliées l'une à la sortie du détecteur de tension 8 délivrant une image de la tension $V_2$ à la sortie de la source de courant et l'autre à la sortie d'un détecteur de crête 25 de cette même tension $V_2$.

Le remplacement de la tension $V_1$ par la valeur de crête de la tension $V_2$ permet de réduire les constantes de temps de réponse à celle du détecteur de crête 25.

Pour un détecteur de crête synchrone, on peut obtenir une réponse en une demi-période du signal de l'onduleur.

Bien entendu, l'agencement de la Fig.6 s'applique tout aussi bien à un onduleur alimenté en tension du type décrit en référence à la Fig.5.

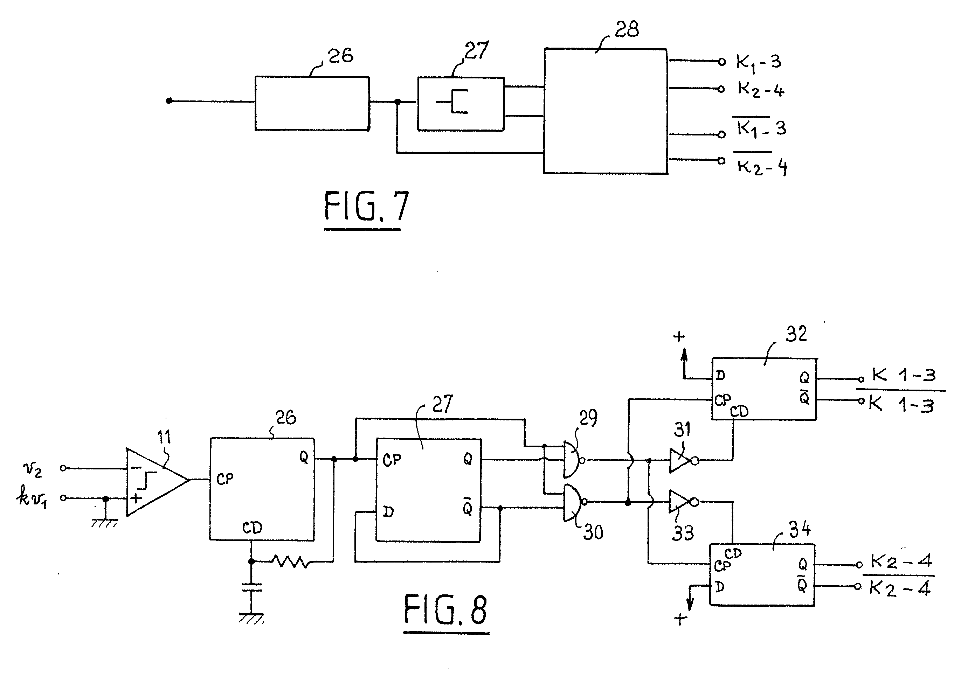

Sur la Fig.7, on a représenté un mode de réalisation particulier d'un diviseur par deux avec génération de temps de décrouvrement et de recouvrement entrant dans la construction du circuit d'auto-pilotage de la Fig.3.

La commande des interrupteurs de puissance $K_1$ à $k_4$ nécessite des ordres légèrement décalés dans le temps afin d'éviter les problèmes de circuit ouvert de l'alimentation en courant ou de court-circuit pour l'alimentation en tension aux instants de commutation des interrupteurs.

A cet effet, le circuit de la Fig. 7 comporte un circuit monostable 26 dont l'entrée est destinée à être connectée à la sortie du comparateur 11 (Fig.3) et dont la sortie est connectée à un diviseur par deux 27 avec aiguillage et à deux sorties reliées à leur tour chacune à une entrée correspondante d'un circuit de mise en forme 28. Ce dernier comporte une entrée supplémentaire reliée directement à la sortie du circuit monostable 26.

Le circuit de mise en forme 28 comporte quatre sorties sur lesquelles sont destinés à apparaître des signaux $K_{1-3}$, $K_{2-4}$ et $\overline{K_{1-3}}$ et $\overline{K_{2-4}}$ avec des décalages appropriés correspondant aux temps de découvrement et de recouvrement nécessaires au fonctionne ment correct de l'onduleur.

Le signal appliqué au circuit monostable 26 est de fréquence 2f de sorte que les signaux de sortie du diviseur par deux 27 ont une fréquence égale à la fréquence f de l'onduleur.

Un tel agencement permet de réaliser la commutation avec un seul générateur de temps de découvrement/recouvrement, ce qui évite les problèmes de dissymétrie rencontrés dans les systèmes ayant deux circuits de génération des temps de découvrement et de recouvrement, utilisés jusqu'à ce jour.

Sur la Fig.8, on a représenté un exemple de réalisation d'un circuit d'auto-pilotage avec génération de temps de découvrement et de recouvrement.

Ce circuit comporte un comparateur 11 de type LM311 par exemple, dont les entrées reçoivent respectivement les signaux $v_2$ et $kv_1$ obtenus de la manière décrite en référence à la Fig.3.

La sortie du comparateur 11 est connectée à l'entrée CP d'une bascule D (HEF 4013 par exemple) montée en monostable 26 dont la sortie Q est connectée à l'entrée CP d'un autre circuit 4013 branché en diviseur par deux 27.

Les sorties Q et $\overline{Q}$ du diviseur 27 sont connectées respectivement à des premières entrées de deux portes ET inverseuses 29 et 30.

Les autres entrées des portes ET 29 et 30 sont connectées à la sortie Q du circuit monostable 26.

La sortie de la porte 29 est connectée par l'intermédiaire d'un inverseur 31 à l'entrée CD d'une bascule D (HEF 4013 par exemple) 32 de génération de signaux avec temps de découvrement et de recouvrement, de commande des interrupteurs $K_1$ et $K_3$.

4

**0 289 403**

La sortie de la porte 30 est connectée par l'intermédiaire d'un inverseur 33 à l'entrée CD d'une bascule (HEF 4013 par exemple) 34 de génération de signaux avec temps de découvrement et de recouvrement, de commande des interrupteurs $K_2$ et $K_4$.

La sortie de la porte ET 29 est de plus connectée à l'entrée CP du circuit 32 tandis que la sortie de la porte ET 30 est connectée de façon analogue à l'entrée CP du circuit 34.

Les signaux $K_{1-3}$ et $\overline{K_{1-3}}$ de commande des interrupteurs $K_1$ et $K_3$ apparaissent sur les sorties Q et $\overline{Q}$ du circuit 32 tandis que les signaux $K_{2-4}$ et $\overline{K_{2-4}}$ de commande des interrupteurs $K_2$ et $K_4$ apparaissent sur les sorties Q et $\overline{Q}$ du circuit 34.

Les temps de découvrement et de recouvrement sont représentés en pointillé sur les représentations des signaux S auto et $\overline{S}$ auto du diagramme de la Fig.4.

## Revendications

1. Circuit d'auto-pilotage pour onduleur à résonance comprenant une source d'alimentation formée d'un générateur de tension continue (1;15), d'un élément de stockage (2;17) et d'un circuit résonnant (3;18,19,20) alimenté par ladite source, et des moyens ($K_1$ à $K_4$; $K'_1$ à $K'_4$) d'inversion de la polarité de connection du circuit résonnant à la source d'alimentation, caractérisé en ce qu'il comporte des moyens (7,8; 21,22) de détection d'une tension ou d'un courant de référence en amont de l'élément de stockage et de la tension ou du courant en aval de l'élément de stockage (2:17) de ladite source d'alimentation, les variations de la tension ou du courant en aval dudit élément de stockage étant liées aux variations de charge aux bornes du circuit résonnant, des moyens (11) de comparaison des signaux de sortie des moyens de détection (7,8; 21,22) et des moyens (12,13) de production de signaux de commande desdits moyens ($K_1$ à $K_4$; $K'_1$ à $K'_4$) d'inversion de la polarité de connexion du circuit résonnant à la source d'alimentation en fonction des signaux de sortie desdits moyens de comparaison (11).

2. Circuit d'auto-pilotage suivant la revendication 1, caractérisé en ce que ledit onduleur étant du type alimenté en courant dont l'élément de stockage est constitué par une inductance (2), il comporte des détecteurs de tension (7,8) connectés respectivement en amont et en aval de ladite inductance, lesdits détecteurs étant constitués par des diviseurs de tension à résistances délivrant des tensions ($v_1$, $v_2$) qui sont respectivement les images de la tension aux bornes du générateur (1) de tension continue et de la tension aux bornes du circuit résonnant, un diviseur de tension supplémentaire (10) destiné à délivrer une ten sion ($k \times v_1$) égale à l'image de la tension de commutation du circuit résonnant (3) étant interposé entre le détecteur (7) de la tension aux bornes du générateur (1) de tension constinue et l'entrée correspondante du comparateur (11).

3. Circuit d'auto-pilotage suivant la revendication 1, caractérisé en ce que ledit onduleur étant du type alimenté en tension dont l'élément de stockage est constitué par un condensateur (17) il comporte des détecteurs de courant (21, 22) connectés respectivement en amont et en aval dudit condensateur, lesdits détecteurs étant constitués par des capteurs de courant à effet Hall ou des shunts délivrant des tensions ($v_1$, $v_2$) qui sont respectivement les images du courant délivré par ladite source d'alimentation et du courant circulant dans le circuit résonnant, un diviseur de tension supplémentaire destiné à délivrer une tension ($k \times v_1$) égale à l'image du courant circulant dans le circuit résonnant (18,19,20) à l'instant de sa commutation étant interposé entre le détecteur (21) du courant délivré par la source d'alimentation (15,16) et l'entrée correspondante du comparateur (11).

4. Circuit d'auto-pilotage suivant l'une des revendications 2 et 3, caractérisé en ce qu'à l'entrée du comparateur (11) destinée à recevoir la tension ($k \times v_1$) proportionnelle à la tension (7;21) délivrée par le détecteur de tension ou de courant de référence est connecté un détecteur de crête (25) dont l'entrée est reliée à la sortie du détecteur de tension ou de courant (8;22) connecté en aval de l'élément de stockage (2;17), le signal délivré par ledit détecteur de crête (25) constituant alors le signal image de la tension ou du courant de référence.

5. Circuit d'auto-pilotage suivant l'une des revendications 1 à 4, caractérisé en ce que les moyens de commande des moyens ($K_1$ à $K_4$; $K'_1$ à $K'_4$) d'inversion de la polarité de connexion du circuit résonnant (3;18,19,20) à ladite source d'alimentation comprennent un diviseur par deux (12) de la fréquence du si-gnal délivré par les moyens comparateurs (11) et un inverseur (13) connecté en parallèle sur la sortie du diviseur par deux (12) afin de disposer à la sortie du diviseur par deux (12) d'un signal (S auto) d'actionnement d'une première partie ($K_1$, $K_3$; $K'_1$, $K'_3$) desdits moyens d'inversion et d'un signal ($\overline{S auto}$) complémentaire d'actionnement simultané d'une seconde partie ($K_2$, $K_4$; $K'_2$, $K'_4$) desdits moyens d'inversion.

6. Circuit d'auto-pilotage suivant la revendication 5, caractérisé en ce que lesdits moyens de commande des moyens d'inversion de la polarité de connexion du circuit résonnant (3;18,19,20) à la source d'alimentation comporte un seul circuit monostable (26) connecté à la sortie desdits moyens de comparaison (11) un diviseur par deux (27) avec aiguillage connecté à la sortie du circuit monostable (26) et un circuit (28) de mise en forme des signaux délivrés par le diviseur par deux (27) et de génération de signaux de commande desdits moyens d'inversion de la polarité de connexion du circuit résonnant

5

(3;18,19,20) à la source d'alimentation ledit circuit de mise en forme (28) assurant la génération desdits signaux de commande avec des temps de découvrement ou de recouvrement.

7. Circuit d'auto-pilotage suivant la revendication 6, caractérisé en ce que ledit circuit de mise en forme (28) comporte deux portes ET inverseuses (29,30), une entrée de chacune de ces portes étant connectée à une sortie correspondante du diviseur par deux (27) et leurs autres entrées étant reliées directement à la sortie du circuit monostable (26), les sorties desdites portes (29,30) étant reliées par l'intermédiaire d'inverseurs correspondants (31,33) à des basculeurs bistables (32,34) à deux sorties sur lesquelles apparaissent respectivement les signaux ($K_{1-3}$, $\overline{K_{1-3}}$) de commande de la première partie desdits moyens d'inversion avec des temps de découvrement et de recouvrement et les signaux ($K_{2-4}$, $\overline{K_{2-4}}$) de commande de la seconde partie desdits moyens d'inversion avec des temps de découvrement et recouvrement.

0289403

FIG.1

FIG.2

FIG.3

0289403

FIG.4

FIG.5

FIG.6

FIG.7

FIG.8

0289403

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 013 424 (Y. SUZUKI et al.)<br>* Résumé; page 1, lignes 13-15; figures 1,2 *<br>--- | 1,2 | H 02 M 7/523 |
| A | DE-C-3 313 124 (N. HARVEST)<br>* Colonne 3, lignes 5-27; figure 1 *<br>----- | 1 | |

DOMAINES TECHNIQUES
RECHERCHES (Int. Cl.4)

H 02 M

**Le présent rapport a été établi pour toutes les revendications**

| Lieu de la recherche | Date d'achèvement de la recherche | Examinateur |
|---|---|---|
| LA HAYE | 18-07-1988 | MOUEZA, A.J.L. |

EPO FORM 1503 03.82 (P0402)